# FASCICULE DE BREVET EUROPEEN

(11) **EP 4 120 407 B1**
(45) Date de publication et mention de la délivrance du brevet: **13.12.2023**
(21) Numéro de dépôt: 22181812.3
(22) Date de dépôt: 29.06.2022
(51) Int. Cl.: H01M 8/249, H01M 8/04089, H01M 8/04223, H01M 8/04082, H01M 8/10

(54) **SYSTÈME DE RÉGÉNÉRATION D'UNE PILE À COMBUSTIBLE COMPRENANT PLUSIEURS GROUPES ET PROCÉDÉ DE RÉGÉNÉRATION**
SYSTEM ZUR REGENERATION EINER BRENNSTOFFZELLE BEINHALTEND MEHRERE GRUPPEN UND ENTSPRECHENDES REGENERATIONSVERFAHREN
SYSTEM FOR REGENERATING A FUEL CELL COMPRISING A PLURALITY OF GROUPS AND REGENERATION METHOD

(30) Priorité: 30.06.2021 FR 2107068
(43) Date de publication de la demande: 18.01.2023
(73) Titulaire: Commissariat à l'énergie atomique et aux énergies alternatives, 75015 Paris (FR)
(72) Inventeur: MICOUD, Fabrice, 38059 GRENOBLE Cedex 09 (FR); MORIN, Arnaud, 38059 GRENOBLE Cedex 09 (FR); POIROT-CROUVEZIER, Jean-Philippe, 38059 GRENOBLE Cedex 09 (FR); VANDENBERGHE, Florent, 38059 GRENOBLE Cedex 09 (FR)
(74) Mandataire: Hautier IP

(56) Documents cités:
- DE-A1-102020 124 141
- US-A1- 2008 145 715
- US-A1- 2016 380 291

## Description

### DOMAINE TECHNIQUE

La présente invention concerne le domaine des piles à combustibles, en particulier les piles à combustible à membrane échangeuse de protons (ou PEMFC pour Proton Exchange Membrane Fuel Cell). Elle peut être mise en oeuvre pour optimiser les performances et régénérer les dégradations réversibles d'une PEMFC.

### ETAT DE LA TECHNIQUE

Une pile à combustible est formée d'un empilement de cellules électrochimiques, comportant chacune une anode et une cathode séparées électriquement l'une de l'autre par un électrolyte. Dans le cas d'une pile à hydrogène, le combustible (l'hydrogène) est apporté au contact de l'anode, et le comburant (l'oxygène) est amené au contact de la cathode. Des réactions d'oxydation et de réduction ont respectivement lieu au niveau de l'anode et de la cathode, ce qui produit de l'électricité et de l'eau. L'électrolyte peut se présenter sous forme d'une membrane assurant le transport des protons issus de la réaction d'oxydation et consommés par la réaction de réduction. C'est le cas des piles à combustible à membrane échangeuse de protons (PEMFC).

L'augmentation des performances et de la durée de vie des piles à combustible PEMFC est considérée comme un enjeu majeur pour le déploiement à grande échelle de cette technologie.

Lors du fonctionnement de la PEMFC, une diminution progressive des performances est généralement observée. Cette diminution de performances est typiquement due à des dégradations dites « irréversibles » d'une part, et à des dégradations dites « réversibles » d'autre part.

Les dégradations irréversibles sont liées à l'altération physique des composants des cellules, par exemple par corrosion du catalyseur, affinement de la membrane, perte d'hydrophobicité des couches de diffusion de gaz. Ce type de dégradations ne peut pas être réparé ou régénéré lors du fonctionnement de la pile.

Les dégradations réversibles sont liées aux interactions entre les composants des cellules et les réactifs et/ou les produits, par exemple par empoisonnement des catalyseurs, assèchement ou noyage local de la cellule. Ce type de dégradations peut être réparé ou régénéré totalement ou partiellement au cours du fonctionnement de la pile.

Il est notamment connu que la formation d'oxydes superficiels de Pt en surface de la cathode diminue progressivement la quantité de sites actifs accessibles pour la réaction de réduction de l'oxygène. Ces oxydes « Pt-Ox » à la cathode peuvent toutefois être éliminés en abaissant le potentiel de la cathode suffisamment bas et suffisamment longtemps. Cela permet de rendre de nouveau accessible les sites actifs « Pt métallique ».

L'élimination des Pt-Ox peut être effectuée en réduisant l'alimentation en air de manière à imposer une pénurie d'air temporaire, lors d'une phase de régénération d'une cellule ou d'un groupe de cellules dans l'empilement. Une telle sous-alimentation en air induit un fonctionnement à très bas potentiel pendant quelques secondes et permet de supprimer une grande partie des dégradations réversibles.

Ce fonctionnement transitoire avec pénurie d'air présente cependant certains inconvénients, notamment :
- une forte hétérogénéité de fonctionnement au sein de la cellule ou du groupe de cellules, pouvant accélérer les mécanismes de dégradations irréversibles ;
- une exacerbation des hétérogénéités de fonctionnement entre les cellules du groupe ;
- un déséquilibre entre les cellules du groupe lors du retour en conditions nominales ;
- une forte baisse de la puissance électrique délivrée par la pile, nécessitant éventuellement une alimentation auxiliaire ;
- une diminution de rendement avec une consommation importante d'H2 pendant le fonctionnement à bas potentiel.

Le document DE 102020124141 A1 divulgue une solution permettant de réduire la teneur en oxygène de l'air alimentant les cellules, par recirculation d'air appauvri en oxygène au sein des cellules de la pile. Cette solution ne permet pas de résoudre les hétérogénéités de fonctionnement des cellules.

Un objet de la présente invention est donc de proposer un système et un procédé de régénération permettant de pallier au moins en partie ces inconvénients.

En particulier, un objet de la présente invention est de proposer une pile à combustible comprenant un système de régénération présentant des performances améliorées.

Un autre objet de la présente invention est de proposer un procédé de régénération d'une pile à combustible.

Les autres objets, caractéristiques et avantages de la présente invention apparaîtront à l'examen de la description suivante et des dessins d'accompagnement. Il est entendu que d'autres avantages peuvent être incorporés. En particulier, certaines caractéristiques et certains avantages du système de régénération peuvent s'appliquer *mutatis mutandis* au procédé de régénération, et réciproquement.

### RESUME

Pour atteindre cet objectif, selon un mode de réalisation on prévoit une pile à combustible comprenant
- Au moins deux groupes de cellules électrochimiques présentant chacun une entrée et une sortie aptes à recevoir un fluide, et
- un circuit fluidique destiné à guider ledit fluide et comprenant, pour chaque groupe
   ∘ une ligne d'alimentation fluidique connectée à l'entrée du groupe considéré, ladite ligne d'alimentation fluidique comprenant un commutateur d'entrée configuré pour autoriser ou bloquer un écoulement dudit fluide,
   ∘ une ligne d'évacuation fluidique connectée à la sortie du groupe considéré, chaque ligne d'alimentation fluidique étant reliée à un conduit d'alimentation principal et chaque ligne d'évacuation fluidique étant reliée à un conduit d'évacuation principal, ledit conduit d'évacuation principal comprenant au moins un commutateur de sortie configuré pour autoriser ou bloquer l'écoulement du fluide,
      ladite pile à combustible étant caractérisée en ce que le circuit fluidique comprend en outre, pour chaque groupe
   ∘ une ligne de recirculation configurée pour mettre en communication fluidique l'entrée et la sortie du groupe considéré, ladite ligne de recirculation comprenant un commutateur de recirculation configuré pour autoriser ou bloquer l'écoulement du fluide,
les commutateurs d'entrée, de sortie et de recirculation du circuit fluidique étant configurés pour permettre une alimentation d'un groupe donné à partir d'une ligne de recirculation dudit groupe donné et d'une ligne d'évacuation fluidique d'au moins un autre groupe. Les lignes d'alimentation et d'évacuation fluidique, et de recirculation, ainsi que les commutateurs d'entrée, de sortie et de recirculation du circuit fluidique forment typiquement un système d'alimentation et de régénération de la pile. Ce système permet un fonctionnement de la pile en phase de production ou en phase de régénération.

Dans le cadre du développement de la présente invention, lors d'un fonctionnement en phase de régénération par pénurie d'air tel qu'enseigné par l'art antérieur, il a été découvert que la forte hétérogénéité de fonctionnement au sein du groupe de cellules provient notamment d'un faible débit fluidique au sein du groupe, qui dégrade la répartition d'air au niveau des cellules du groupe. Cela entraîne une réaction localisée au niveau de l'entrée d'air, avec une production d'eau et de chaleur très localisée qui accélère les mécanismes de dégradations irréversibles. La mauvaise répartition des réactifs, en particulier du comburant, impacte négativement le fonctionnement de la pile également lors du retour en phase de production nominale.

Au contraire, dans la présente invention, lors d'une phase de régénération, le système permet avantageusement d'appauvrir le fluide d'alimentation en réactifs ou en comburant, tout en maintenant un débit fluidique élevé. Ainsi, en commutant de façon appropriée les commutateurs d'entrée, de sortie et de recirculation du circuit fluidique, un groupe donné est avantageusement alimenté par un fluide provenant en partie de la sortie d'au moins un autre groupe et en partie dudit groupe donné, par recirculation entre l'entrée et la sortie de ce groupe donné. Ce fluide est typiquement destiné à apporter la ou les espèces réactives aux électrodes des cellules, et à évacuer les produits de réaction. En particulier, le fluide apporte le comburant à la cathode de chaque cellule. Lorsque le fluide traverse un groupe de cellules, la fraction molaire de comburant dans le fluide diminue. L'alimentation d'un groupe par un fluide ayant traversé au moins un autre groupe est donc appauvrie en comburant. La recirculation du fluide entre l'entrée et la sortie d'un groupe donné appauvrit également le fluide en comburant. Un groupe alimenté en partie par la sortie d'un autre groupe et en partie par recirculation est donc alimenté par un fluide appauvri, voire très appauvri, en comburant. Cela permet à ce groupe de fonctionner à très bas potentiel, par exemple à une tension de régénération Ve ≤ 0,3 V, et par conséquent de se régénérer. Avantageusement, seule la fraction molaire du comburant est modifiée lors de la phase de régénération, et le débit reste suffisamment élevé pour éviter une mauvaise répartition du fluide appauvri au sein du groupe. Le maintien d'un débit suffisamment élevé peut se faire par une pompe de recirculation sur la ligne de recirculation.

Le système permet avantageusement d'alimenter à la fois un groupe donné par un fluide appauvri en comburant, et le ou les autres groupes par un fluide présentant une fraction molaire de comburant nominale. Cela permet de régénérer le groupe donné tout en assurant une production d'électricité nominale via les autres groupes. Il n'est pas nécessaire de recourir à une alimentation auxiliaire lors de la phase de régénération.

Avantageusement, en commutant de façon appropriée les commutateurs d'entrée, de sortie et de recirculation du circuit fluidique, différents chemins fluidiques peuvent être formés entre les groupes de cellules. Le fluide s'écoule ainsi dans le circuit fluidique le long de ces chemins fluidiques. Les chemins fluidiques peuvent être établis de façon versatile, selon les besoins. Comme indiqué précédemment, lors d'une phase de régénération d'un groupe donné, le chemin fluidique est de préférence choisi tel que le fluide alimentant ledit groupe donné soit appauvri en comburant, par recirculation à partir dudit groupe donné et par passage au travers d'au moins un autre groupe.

Le chemin fluidique est de préférence choisi tel que ledit fluide appauvri alimentant le groupe donné présente, lors de la phase de régénération, un sens de circulation au travers du groupe inversé par rapport au sens de circulation normalement adopté lors d'une phase de production nominale du groupe. Cette inversion du sens d'écoulement du fluide dans un groupe donné peut typiquement se faire via la pompe de recirculation de la ligne de recirculation. L'inversion du sens de circulation du fluide au travers du groupe en phase de régénération permet de mieux répartir le fluide au sein des cellules du groupe. La régénération des cellules du groupe est ainsi plus homogène.

La commutation appropriée des commutateurs d'entrée, de sortie et de recirculation du circuit fluidique peut être effectuée par un système de contrôle commande de la pile PEMFC. Un tel système peut être avantageusement intégré à la pile PEMFC.

Le système selon la présente invention permet un fonctionnement homogène et stabilisé à bas potentiel du groupe en cours de régénération. Un tel fonctionnement est typiquement basé sur une alimentation à la cathode en air appauvri en dioxygène tout en maximisant le flux volumique d'air dans le groupe en cours de régénération. Cela permet notamment :
- une (ré)hydratation des couches actives et de la membrane dans les cellules de ce groupe,
- une réduction des oxydes superficiels de Pt et une désorption des espèces éventuellement adsorbées au niveau du ou des catalyseurs des cathodes,
- un fort débit de gaz au niveau des cathodes, assurant une bonne répartition fluidique au sein des cellules et entre les cellules, et une bonne évacuation de l'eau liquide,
- une limitation de la consommation d'H2 et de la production de chaleur lors de cette phase de régénération à bas potentiel.

Ainsi, la solution proposée comprend un système de régénération présentant des performances considérablement améliorées par rapport aux solutions connues.

Selon un autre aspect on prévoit un procédé de régénération d'une pile à combustible telle que décrite précédemment. Ce procédé comprend :
- Une alimentation de la pile par le conduit d'alimentation principal par un fluide présentant un débit nominal et une fraction molaire nominale de comburant,
lors d'une phase de régénération d'un groupe donné :
- Une commutation des commutateurs d'entrée, de sortie et de recirculation du circuit fluidique de façon à alimenter le groupe donné à partir de la ligne de recirculation dudit groupe donné et d'une ligne d'évacuation fluidique d'au moins un autre groupe,
- Une application d'une tension de régénération Ve aux cellules dudit groupe donné, Ve étant inférieure ou égale à 0,3 V.

Le procédé permet ainsi de régénérer le groupe donné en appauvrissant la fraction molaire de comburant du fluide d'alimentation et en maintenant une tension de régénération Ve ≤ 0,3 V. Lors du développement de la présente invention, il a été constaté que l'application d'une tension de régénération Ve ≤ 0,3 V sous atmosphère appauvrie en comburant permet de réduire efficacement les oxydes superficiels Pt-Ox au niveau des cathodes des cellules. La régénération est ainsi plus efficace et plus rapide.

Le débit d'alimentation du groupe donné lors de la phase de régénération est de préférence sensiblement égal au débit nominal. Cela permet d'éviter un échauffement local des cellules du groupe en phase de régénération.

### BREVE DESCRIPTION DES FIGURES

Les buts, objets, ainsi que les caractéristiques et avantages de l'invention ressortiront mieux de la description détaillée de modes de réalisation de cette dernière qui sont illustrés par les dessins d'accompagnement suivants dans lesquels :
La figure 1 illustre schématiquement une pile comprenant deux groupes en phase de production nominale, selon un mode de réalisation de la présente invention.
La figure 2 illustre schématiquement une pile comprenant deux groupes, l'un des groupes étant en phase de régénération, selon un mode de réalisation de la présente invention.
La figure 3 illustre schématiquement une pile comprenant deux groupes, l'autre des groupes étant en phase de régénération, selon un mode de réalisation de la présente invention.
La figure 4 illustre schématiquement une pile comprenant deux groupes en phase d'arrêt, selon un mode de réalisation de la présente invention.
La figure 5 illustre schématiquement une pile comprenant trois groupes en phase de production nominale, selon un mode de réalisation de la présente invention.
La figure 6A illustre schématiquement une pile comprenant trois groupes, un premier groupe parmi les trois groupes étant en phase de régénération, selon un mode de réalisation de la présente invention.
La figure 6B illustre schématiquement une pile comprenant trois groupes, un premier groupe parmi les trois groupes étant en phase de régénération avec une circulation de fluide inversée par rapport à la circulation de fluide illustrée à la figure 6A, selon un mode de réalisation de la présente invention.
La figure 7 illustre schématiquement une pile comprenant trois groupes, un deuxième groupe parmi les trois groupes étant en phase de régénération, selon un mode de réalisation de la présente invention.
La figure 8 illustre schématiquement une pile comprenant trois groupes, un troisième groupe parmi les trois groupes étant en phase de régénération, selon un mode de réalisation de la présente invention.
La figure 9 illustre schématiquement une pile comprenant trois groupes en phase d'arrêt, selon un mode de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, lors d'une phase de régénération d'un premier groupe :
- au moins un deuxième groupe est alimenté en fluide par le conduit d'alimentation principal,
- le premier groupe est alimenté en fluide par la sortie du deuxième groupe, et par sa propre sortie, par recirculation dudit fluide via sa ligne de recirculation.

Selon un exemple, le fluide présente un premier sens d'écoulement dans le groupe donné lors de la phase de régénération dudit groupe donné, et un deuxième sens d'écoulement dans le groupe donné lors d'une phase de production nominale dudit groupe donné, le premier sens d'écoulement étant opposé au deuxième sens d'écoulement et la phase de production nominale étant distincte de la phase de régénération.

Selon un exemple, la ligne de recirculation d'un groupe présente au moins une section commune avec la ligne de recirculation d'au moins un autre groupe.

Selon un exemple, le circuit fluidique comprend en outre une pompe de recirculation commune à chaque ligne de recirculation du circuit fluidique, ladite pompe de recirculation étant configurée pour maintenir un débit de fluide suffisant dans le groupe donné lors de la phase de régénération, en particulier un débit de fluide supérieur ou égal à 50% d'un débit nominal mesuré dans le conduit d'alimentation principal. Ce débit de fluide peut être supérieur ou égal à 80% du débit nominal. L'utilisation d'une pompe de recirculation pour alimenter de manière complémentaire le groupe en phase de régénération permet notamment une meilleure homogénéisation fluidique entre et au sein des cellules du groupe.

La recirculation du fluide dans le groupe via la ligne de recirculation permet également de diminuer la fraction molaire de comburant (oxygène) en entrée du groupe et, subséquemment, d'obtenir une meilleure répartition de la densité de courant le long des cellules du groupe. Cela permet ainsi d'abaisser plus facilement le potentiel des cellules à un courant donné. Cela permet *in fine* de consommer moins d'hydrogène et de limiter la génération de chaleur. Cela permet aussi de limiter la production d'eau dans les cellules. Cela permet en outre d'éviter une accumulation locale d'eau liquide dans la cellule. Cela permet ainsi d'optimiser la régénération des performances de la cellule / du groupe considéré.

La recirculation du fluide via la ligne de recirculation permet avantageusement de réinjecter du fluide suffisamment humide en entrée du groupe. Les gradients d'humidité dans les cellules du groupe sont ainsi limités. Cela permet d'éviter un assèchement des cellules lors de la régénération.

La pompe de recirculation est de préférence dimensionnée pour alimenter un seul groupe ou quelques groupes de cellules uniquement. Il est ainsi possible d'utiliser une pompe de puissance et/ou de taille réduite.

Selon un exemple, la pompe de recirculation est configurée pour permettre une inversion d'un sens d'écoulement du fluide dans ledit groupe donné. Cela permet d'homogénéiser la répartition en comburant et/ou en densité de courant entre et au sein des cellules du groupe.

Selon un exemple, la pile comprend en outre un système de contrôle-commande configuré pour commander les commutateurs d'entrée, de sortie et de recirculation du circuit fluidique de façon à autoriser ou bloquer l'écoulement du fluide le long d'un chemin fluidique choisi. Des cycles de régénération peuvent ainsi être facilement programmés, sur chacun des groupes de la pile alternativement et/ou successivement. Les phases de production nominale, de régénération d'un groupe, d'arrêt de la pile sont avantageusement pilotées par un tel système de contrôle-commande. Le système de contrôle-commande peut typiquement prendre en compte des paramètres de production électrique et/ou fluidique d'un ou plusieurs groupes, de consommation de la puissance produite, de pertes de charge au sein de la pile, pour déterminer le ou les chemins fluidiques *ad hoc* en fonction de la phase de fonctionnement de la pile. Les performances électriques de la pile peuvent typiquement servir à évaluer le besoin de régénération d'un ou plusieurs groupes de la pile.

Selon un exemple, la pile comprend au moins trois groupes de cellules électrochimiques. Un seul groupe est en phase de régénération lorsque les deux autres sont en phase de production nominale. Ainsi, la pile peut continuer à produire de l'énergie électrique grâce au fonctionnement des groupes en phase de production nominale.

Selon un exemple, lors de la phase de régénération d'un groupe donné, l'alimentation du groupe donné se fait à partir de la ligne de recirculation dudit groupe donné et des lignes d'évacuation fluidique d'au moins deux autres groupes de la pile. Ces autres groupes contribuent à l'alimentation en fluide appauvri du groupe concerné par la phase de régénération.

Selon un exemple, la phase de régénération est configurée de sorte que la fraction molaire de comburant du fluide circulant au travers du groupe donné soit inférieure ou égale à 50% de la fraction molaire nominale de comburant. Un tel appauvrissement en comburant permet d'abaisser la tension de fonctionnement du groupe en régénération. Une basse tension permet de réduire efficacement les oxydes superficiels de Pt. Les sites actifs du catalyseur sont ainsi réactivés. Les dégradations réversibles sont en grande partie supprimées.

Selon un exemple, le fluide circulant au travers du groupe donné présente un débit supérieur ou égal à 50% du débit nominal. Cela permet de maintenir une circulation suffisamment rapide du fluide dans les cellules, de sorte que tout le comburant ne soit pas consommé en sortie du groupe en phase de régénération. Une différence de fraction molaire de comburant entre l'entrée et la sortie du groupe inférieure à 6%, par exemple de l'ordre de 3%, peut ainsi être avantageusement obtenue. Ainsi, le fluide perd typiquement 3 points de pourcentage en traversant le groupe en phase de régénération. Sa fraction molaire de comburant peut ainsi passer de 10% à 7% en traversant le groupe. Selon un autre exemple, la fraction molaire de comburant du fluide traversant le groupe peut ainsi passer de 7% à 4%. Un débit de fluide important permet également un bon brassage du fluide entre et au sein des cellules du groupe. Une régénération plus efficace et plus homogène est ainsi obtenue.

Selon un exemple, la phase de régénération est effectuée pendant une durée t inférieure ou égale à 10 s.

Selon un exemple, la phase de régénération est effectuée alternativement sur chaque groupe de cellules électrochimiques de la pile.

Selon un exemple, la phase de régénération comprend une inversion du sens d'écoulement du fluide dans ledit groupe donné. Cela permet d'améliorer le brassage entre et au sein des cellules du groupe, et d'homogénéiser la régénération du groupe.

Selon un exemple, la phase de régénération est effectuée lorsque la pile n'a pas besoin de fonctionner en phase de production nominale, en particulier lorsqu'une production électrique demandée à la pile est inférieure à une production électrique nominale de la pile.

Selon un exemple, la pile comprend au moins trois groupes et la phase de régénération est effectuée simultanément sur le groupe donné et sur au moins un autre groupe.

Selon un exemple, au moins un groupe de la pile est en phase de production nominale pendant la phase de régénération d'au moins un groupe donné.

Sauf incompatibilité, il est entendu que le procédé de régénération et le système de régénération de la pile peuvent comprendre, *mutatis mutandis,* l'ensemble des caractéristiques optionnelles ci-dessus.

Ainsi, des caractéristiques techniques décrites en détail pour un mode de réalisation donné peuvent être combinées aux caractéristiques techniques décrites dans le contexte d'autres modes de réalisation décrits à titre exemplaire et non limitatif. En particulier, des éléments décrits ou illustrés sur les figures pour la pile ou pour le procédé peuvent être combinés de manière à former un autre mode de réalisation qui n'est pas nécessairement illustré ou décrit. Un tel mode de réalisation n'est évidemment pas exclu de l'invention. Une pile à combustible selon la présente invention comprend typiquement plus que deux groupes, et typiquement plus que trois groupes de cellules électrochimiques. Le nombre limité de groupes illustrés dans les dessins d'accompagnement vise à faciliter la compréhension du principe de régénération selon l'invention. L'homme du métier n'aura aucune difficulté à mettre en oeuvre un mode de réalisation comprenant plus que trois groupes de cellules électrochimiques.

Dans le cadre de la présente invention, on entend par « pile à combustible » un système comprenant plusieurs groupes de cellules électrochimiques. Chaque groupe est ainsi constitué d'une série de cellules électrochimiques interconnectées. Les cellules se présentent typiquement sous forme d'un assemblage membrane-électrodes couramment désigné AME. Les groupes peuvent former un unique empilement de cellules. Alternativement, les groupes peuvent former des empilements distincts les uns des autres, comme illustré dans les figures d'accompagnement. Lorsque les groupes forment un unique empilement, chaque groupe dispose de préférence d'un conduit d'alimentation en réactif qui lui est propre. Le conduit d'évacuation peut être commun à l'ensemble des groupes. Par ailleurs, les plaques de serrage maintenant les cellules dans un tel empilement unique peuvent typiquement interconnecter électriquement toutes les cellules entre elles. Les cellules sont alors typiquement montées en série. Le même courant électrique sera alors appliqué à tous les groupes de l'empilement, quelle que soit la phase de fonctionnement.

La pile présente typiquement différentes phases de fonctionnement, en particulier, une phase de production nominale, une phase de régénération, une phase d'arrêt.

Lors d'une phase de production nominale, les groupes de la pile sont alimentés en parallèle par un fluide d'alimentation.

Lors d'une phase de régénération d'un groupe donné, ce groupe donné est alimenté en série à partir d'au moins un autre groupe.

Lors d'une phase d'arrêt, la pile n'est plus alimentée par le conduit d'alimentation principal. Les groupes peuvent continuer à être alimentés temporairement et de façon dégressive par recirculation.

Les groupes de la pile peuvent être interconnectés électriquement en série. Alternativement, un ou plusieurs groupes peuvent être connectés indépendamment les uns des autres à un réseau au travers de convertisseurs électriques permettant un pilotage individuel. Les groupes ne sont pas connectés en parallèle, car la tension du groupe en régénération doit être inférieure à celles des groupes en production nominale.

Dans le cadre de la présente invention, une entrée ou une sortie d'un groupe présentent typiquement chacune un aspect structurel et un aspect fonctionnel. Ainsi structurellement, l'entrée et la sortie correspondent à des premier et deuxième orifices de passage pour le fluide d'alimentation. Fonctionnellement, l'entrée et la sortie désignent respectivement l'admission et l'évacuation du fluide d'alimentation. Dans la mesure où le sens de circulation du fluide peut être inversé, l'entrée et la sortie peuvent être physiquement interverties. Ainsi, le premier orifice de passage peut former l'entrée ou la sortie, et inversement, le deuxième orifice de passage peut former la sortie ou l'entrée.

Pour faciliter la compréhension vis-à-vis de la circulation du fluide dans les cellules de la pile, nous conservons uniquement les termes entrée/sortie et leurs références correspondantes sur les dessins d'accompagnement, respectivement X1 (X= 1...3) pour l'entrée et X2 (X= 1... 3) pour la sortie, indépendamment de l'orifice matériellement concerné.

Dans le cadre de la présente invention, la ligne de recirculation est configurée pour mettre en communication fluidique l'entrée et la sortie du groupe considéré. Cette ligne de recirculation s'étend entre l'entrée et la sortie du groupe considéré. Chaque ligne de recirculation est propre au groupe considéré. Elle ne passe pas par un autre groupe que le groupe considéré. Elle peut emprunter des sections d'autres lignes, par exemple des lignes d'alimentation et/ou d'évacuation. Ainsi, des sections de la ligne de recirculation peuvent être communes avec des sections d'autres lignes. Des points de piquage ou des embranchements peuvent être physiquement présents le long de cette ligne de recirculation. Des organes peuvent également être présents le long de cette ligne de recirculation. Ce sont typiquement des organes de régulation tels que le commutateur de recirculation et la pompe de recirculation. Ces organes n'incluent pas d'autre groupe de cellules électrochimiques. La ligne de recirculation connecte fluidiquement l'entrée et la sortie du seul groupe auquel elle est attachée. Ainsi, l'entrée d'un groupe est en connexion fluidique avec la sortie du même groupe, via la ligne de recirculation.

D'autres éléments, par exemple des volumes de récupération d'eau liquide associés à des dispositifs de séparation de phase, ou d'éventuels réchauffeurs/échangeurs thermiques évitant la formation de points de condensation dans les lignes, ou encore des dispositifs anti-retour, peuvent également être présents le long des lignes. Par souci de clarté, ces éléments ne sont pas nécessairement illustrés sur les figures d'accompagnement.

Plusieurs modes de réalisation de l'invention mettant en oeuvre des étapes successives du procédé de régénération sont décrits ci-après. Sauf mention explicite, l'adjectif « successif » n'implique pas nécessairement, même si cela est généralement préféré, que les étapes se suivent immédiatement, des étapes intermédiaires pouvant les séparer.

Par ailleurs, le terme « étape » s'entend de la réalisation d'une partie du procédé, et peut désigner un ensemble de sous-étapes.

Par ailleurs, le terme « étape » ne signifie pas obligatoirement que les actions menées durant une étape soient simultanées ou immédiatement successives. Certaines actions d'une première étape peuvent notamment être suivies d'actions liées à une étape différente, et d'autres actions de la première étape peuvent être reprises ensuite. Ainsi, le terme étape ne s'entend pas forcément d'actions unitaires et inséparables dans le temps et dans l'enchaînement des phases du procédé.

Dans la présente demande, on entend par « stoechiométrie », le ratio entre la quantité de réactif en entrée et la quantité consommée par la réaction électrochimique. Si la fraction molaire en sortie de cellule peut être évaluée par un simple bilan de masse, l'évolution le long des cellules en interne du groupe ou de la pile n'est généralement pas connue. Ainsi, une stoechiométrie de 2 indique que la quantité de réactif en entrée (typiquement le comburant O2) est deux fois supérieure à la quantité de réactif en sortie. Une stoechiométrie de 1,5 indique que la quantité de réactif en entrée (typiquement le comburant O2) est trois fois supérieure à la quantité de réactif en sortie. Une stoechiométrie de 1 indique que le réactif introduit dans la cellule est totalement consommé par la réaction électrochimique.

Sur les figures annexées, un sens de circulation du fluide dans le circuit fluidique est indiqué par une flèche. Les commutateurs passant ou bloquant (typiquement des vannes ouvertes ou fermées) sont illustrés. Les traits pointillés illustrent différentes fractions molaires de comburant du fluide circulant dans la ligne fluidique concernée, c'est-à-dire la ligne d'alimentation ou la ligne d'évacuation ou la ligne de recirculation.

Dans les exemples qui suivent, le fluide d'alimentation de la pile est de l'air présentant une fraction molaire nominale d'oxygène de l'ordre de 21%, et un débit nominal. Les fractions molaires en oxygène s'entendent en %molaire en gaz sec. Pour simplifier, chaque groupe est réputé identique et comprend un nombre identique de cellules. Les valeurs de stoechiométrie, de courant et de tension de fonctionnement sont donc identiques entre chaque groupe. Il est néanmoins parfaitement envisageable de mettre en oeuvre un ou plusieurs groupes dimensionnés différemment, sans se départir du principe général de régénération explicité ci-après.

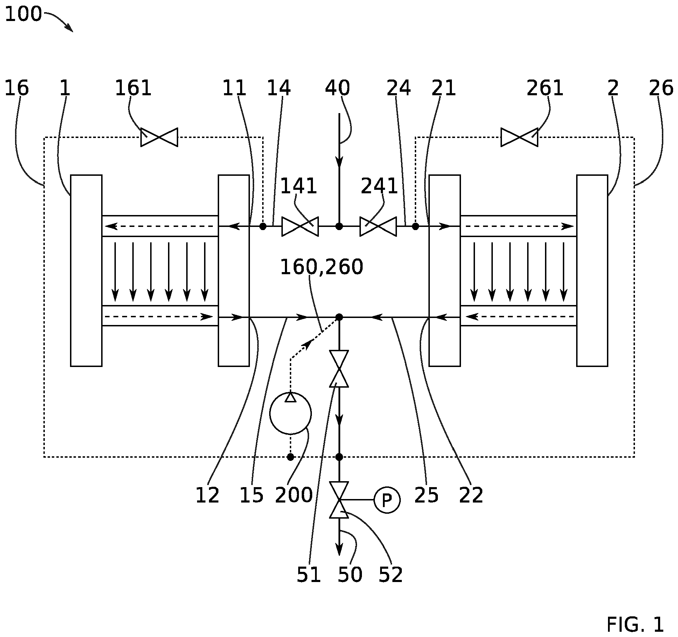

Un premier exemple de pile 100 comprenant un système de régénération selon l'invention est illustré aux figures 1 à 4. Dans cet exemple, la pile comprend deux groupes 1, 2 connectés via un circuit fluidique. La pile est dimensionnée de façon à ce que la stoechiométrie globale soit supérieure à 1. Pour une telle pile comprenant deux groupes identiques, la valeur de stoechiométrie unitaire, pour chacun des groupes, peut donc être typiquement supérieure ou égale à 2,0. Dans ce cas, la fraction molaire d'oxygène en sortie de chacun des groupes, qui dépend de cette stoechiométrie unitaire, est de l'ordre de 11,7%. Pour obtenir une bonne performance de la pile, une valeur de stoechiométrie globale comprise entre 1,6 et 2,0 est de préférence choisie. La pile et le circuit fluidique sont dès lors dimensionnés en conséquence, typiquement en tenant compte des pertes de charge au sein des groupes.

Le circuit fluidique comprend typiquement un conduit d'alimentation principal 40, des lignes d'alimentation 14, 24, des lignes d'évacuation 15, 25, des lignes de recirculation 16, 26 et un conduit d'évacuation principal 50. Ce circuit fluidique comprend en outre des commutateurs d'entrée 141, 241, des commutateurs de sortie 51, 52, des commutateurs de recirculation 161, 261. Les lignes d'évacuation 15, 25 sont de préférence dépourvues de commutateur. La structure de cette pile ne varie pas dans les figures 1 à 4. Seul l'état bloquant ou passant des différents commutateurs, déterminant le chemin de circulation du fluide dans le circuit fluidique, varie. L'assignation des entrées et sortie varie également, en fonction des différentes phases de fonctionnement de la pile et du sens de circulation du fluide d'alimentation.

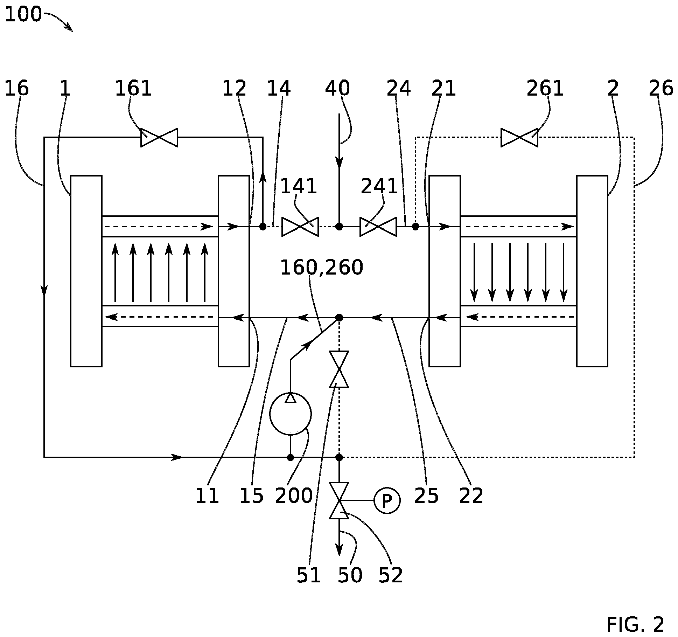

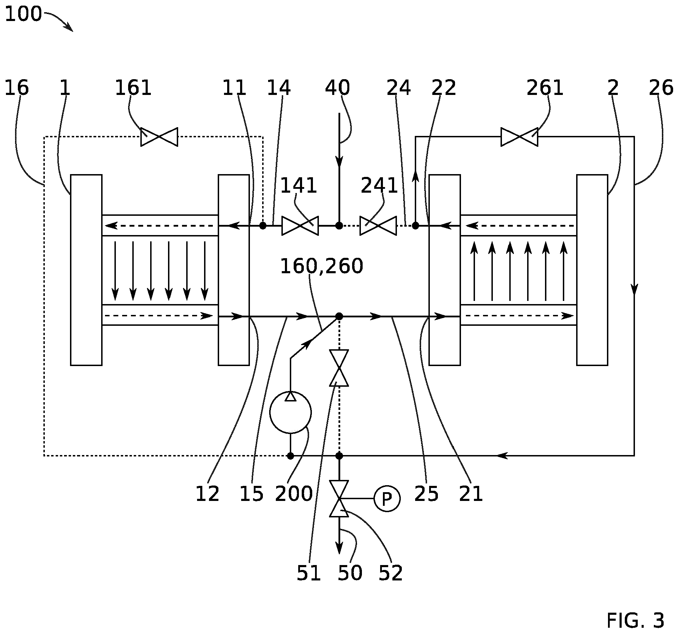

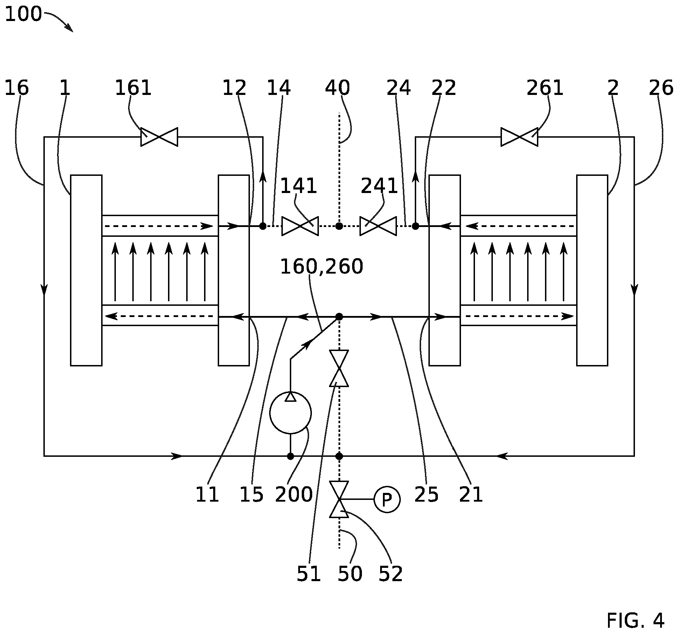

La figure 1 illustre un fonctionnement de cette pile lors d'une phase de production nominale. La figure 2 illustre un fonctionnement de cette pile lors d'une phase de régénération du groupe 1. La figure 3 illustre un fonctionnement de cette pile lors d'une phase de régénération du groupe 2. La figure 4 illustre un fonctionnement de cette pile lors d'une phase d'arrêt.

Comme illustré en figure 1, lors d'une phase de production nominale, tous les groupes 1, 2 sont alimentés en parallèle, simultanément. Ainsi l'air arrivant dans la pile et présentant une fraction molaire d'oxygène nominale (typiquement 21%) est amené par le conduit d'alimentation principal 40 et distribué à l'entrée 11 du groupe 1 et à l'entrée 21 du groupe 2. Les commutateurs d'entrée 141, 241 sont passants ou ouverts. L'air circule dans chaque ligne d'alimentation 14, 24 jusqu'aux entrées respectives 11, 21 des groupes 1 et 2. Après avoir traversé les groupes 1 et 2, l'air sort par les sorties respectives 12, 22 et circule dans chaque ligne d'évacuation 15, 25 jusqu'au conduit d'évacuation principal 50. Les commutateurs de sortie 51, 52 sont ouverts. Le commutateur 52 est de préférence un régulateur de pression. Cela permet de contrôler la pression d'air au sein de la pile. Les commutateurs de recirculation 161, 261 sont fermés de sorte que l'air ne circule pas dans les lignes de recirculation 16, 26. Cette phase de fonctionnement correspond au fonctionnement nominal de la pile en l'absence de régénération des performances.

Comme illustré aux figures 2 et 3 lors d'une phase de régénération, un groupe est alimenté en série à partir d'au moins un autre groupe. Ainsi, dans l'exemple de la figure 2, le groupe 1 est en cours de régénération et le groupe 2 est en cours de production nominale. Dans cet exemple, l'air arrivant dans la pile et présentant une fraction molaire d'oxygène nominale (typiquement 21%) est amené par le conduit d'alimentation principal 40 à l'entrée 21 du groupe 2 uniquement. Le commutateur d'entrée 141 du groupe 1 est fermé. Le commutateur d'entrée 241 du groupe 2 est ouvert. L'air circule dans la ligne d'alimentation 24 jusqu'à l'entrée 21. Après avoir traversé le groupe 2, l'air sort par la sortie 22 et circule dans la ligne d'évacuation 25 jusqu'à l'entrée 11 du groupe 1. Le commutateur de sortie 51 est fermé. Le groupe 1 est ainsi alimenté par un air appauvri en oxygène provenant de la sortie 22 du groupe 2. Cet air présente par exemple une fraction molaire d'O2 de l'ordre de 11,7% à la sortie 22 du groupe 2.

Pour diminuer encore plus la fraction molaire d'oxygène de l'air alimentant le groupe 1 en phase de régénération, l'air sortant du groupe 1 par la sortie 12 est avantageusement réinjecté en partie dans le groupe 1 par l'entrée 11 via la ligne de recirculation 16, de préférence grâce à une pompe de recirculation 200. Le commutateur de recirculation 161 est ici ouvert, tandis que le commutateur de recirculation 261 est fermé. Une partie de l'air circulant dans la ligne de recirculation 16 est évacué via le conduit d'évacuation principal 50 et le régulateur de pression 52. Dans l'exemple illustré, la ligne de recirculation 16 présente typiquement un embranchement P1 avec les lignes d'évacuation 15, 25, et un embranchement P2 avec le conduit d'évacuation principal 50. La ligne de recirculation 16 comprend ici la section 160 entre la pompe de recirculation 200 et l'embranchement P1.

La recirculation permet de diminuer la fraction molaire en oxygène de l'air (hors vapeur d'eau) alimentant le groupe 1 typiquement en dessous de 7%, voire de 5%. Une telle fraction molaire en oxygène réduite permet de diminuer la tension de fonctionnement de la pile, en condition de régulation en courant de la pile. Cela permet avantageusement de favoriser la réduction rapide des oxydes superficiels Pt-Ox. Cette tension de fonctionnement est de préférence inférieure à 0,3 V, et plus préférentiellement inférieure ou égale à 0,2 V.

La recirculation permet également d'améliorer l'homogénéité de fraction molaire en oxygène entre l'entrée 11 et la sortie 12 du groupe 1. La ligne de recirculation 16 et le commutateur de recirculation 161 sont dimensionnés de façon à atteindre une différence de fraction molaire inférieure à 6%, et de préférence d'environ 3%, entre l'entrée 11 et la sortie 12 du groupe 1. Ainsi, la différence de fraction molaire x_{O2} = x_{O2,entrée} - x_{O2,sortie} entre la fraction molaire en entrée x_{O2,entrée} et la fraction molaire x_{O2,sortie} est inférieure ou égale dans tous les cas à 6%.

La fraction molaire d'oxygène entrant dans le groupe 1 peut ainsi être contrôlée en fixant le courant I dans le sous-groupe 1, le débit d'air et le taux de recirculation (c'est-à-dire le rapport entre la partie d'air réinjectée et la partie d'air évacuée).

La recirculation permet également de réinjecter du fluide suffisamment humide en entrée du groupe. Les gradients d'humidité dans les cellules du groupe sont ainsi limités. Cela permet d'éviter un assèchement des cellules lors de la régénération.

Avantageusement, une pompe de recirculation 200 est disposée sur la ligne de recirculation 16. Cela permet de réinjecter plus efficacement l'air appauvri dans le groupe 1 en cours de régénération. Cela permet également de conserver un débit d'air suffisamment élevé, par exemple supérieur à 50% environ du débit nominal, voire supérieur à 80% du débit nominal en entrée 11 du groupe 1.

L'utilisation d'une pompe de recirculation 200 permet ainsi une meilleure homogénéisation fluidique entre et au sein des cellules du groupe 1. Cela permet en outre d'éviter une accumulation locale d'eau liquide dans les cellules.

La pompe de recirculation 200 est de préférence dimensionnée pour alimenter le ou les seuls groupes concernés par la phase de régénération. Il est ainsi possible d'utiliser une pompe de puissance et/ou de taille réduite. La pompe de recirculation 200 permet en outre de préférence une inversion du sens de circulation de l'air dans le groupe 1.

Avantageusement, le sens de circulation de l'air dans le groupe 1 est inversé lors de la phase de régénération, par rapport au sens de circulation usuel lors de la phase de production nominale, comme illustré aux figures 1 et 2. Cela permet un brassage gazeux à l'intérieur des cellules du groupe 1 et une meilleure homogénéisation des fractions molaires en eau et en oxygène à l'intérieur des cellules.

La durée de la phase de régénération est typiquement de l'ordre de la seconde à quelques secondes. Après régénération du groupe 1, le groupe 2 peut être à son tour régénéré.

Dans l'exemple illustré à la figure 3, le groupe 2 est en cours de régénération et le groupe 1 est en cours de production nominale. Dans cet exemple, l'air est amené par le conduit d'alimentation principal 40 à l'entrée 11 du groupe 1 uniquement. Le commutateur d'entrée 241 du groupe 2 est fermé. Le commutateur d'entrée 141 du groupe 1 est ouvert. L'air circule dans la ligne d'alimentation 14 jusqu'à l'entrée 11. Après avoir traversé le groupe 1, l'air sort par la sortie 12 et circule dans la ligne d'évacuation 15 jusqu'à l'entrée 21 du groupe 2. Le commutateur de sortie 51 est fermé. Le groupe 2 est ainsi alimenté par un air appauvri en oxygène provenant de la sortie 12 du groupe 1.

Pour diminuer encore plus la fraction molaire d'oxygène de l'air alimentant le groupe 2 en phase de régénération, l'air sortant du groupe 2 par la sortie 22 est avantageusement réinjecté en partie dans le groupe 2 par l'entrée 21 via la ligne de recirculation 26, de préférence grâce à la pompe de recirculation 200. Le commutateur de recirculation 261 est ici ouvert, tandis que le commutateur de recirculation 161 est fermé. Une partie de l'air circulant dans la ligne de recirculation 26 est évacué via le conduit d'évacuation principal 50 et le régulateur de pression 52. La pompe de recirculation 200 est commune aux lignes de recirculation 16, 26. Dans l'exemple illustré, la ligne de recirculation 26 présente typiquement un embranchement P1 avec les lignes d'évacuation 15, 25, et un embranchement P2 avec le conduit d'évacuation principal 50. La ligne de recirculation 26 comprend ici la section 260 entre la pompe de recirculation 200 et l'embranchement P1.

Les effets et avantages décrits précédemment dans le cas de la régénération du groupe 1 sont parfaitement transposables au cas de la régénération du groupe 2 et ne sont donc pas répétés ici, par souci de concision.

Les trois phases de fonctionnement décrites ci-dessus et illustrées aux figures 1, 2 et 3 peuvent être réalisées alternativement pour optimiser les performances globales de la pile et des groupes. La survenance, l'alternance et la durée de ces différentes phases de production et de régénération peuvent être définies en fonction :
- du besoin de fourniture de puissance de la pile,
- d'un critère de performances donné (par exemple un seuil de tension à un point de fonctionnement donné, ou vis-à-vis d'une fenêtre de fonctionnement inadaptée ou instable),
- d'un déséquilibre de pertes de charges entre les groupes ou d'un déséquilibre de performances entre les groupes.

L'architecture du circuit fluidique de la pile permet également, de façon avantageuse, d'améliorer une phase d'arrêt de la pile.

Comme illustré à la figure 4, lors d'une phase d'arrêt de la pile, il est possible de couper l'alimentation en air au niveau du conduit d'alimentation principal 40, tout en autorisant une recirculation d'air dans chacun des groupes 1, 2. Les commutateurs d'entrée 141, 241 sont fermés. La pompe de recirculation 200 permet à l'air de circuler dans chaque ligne de recirculation 16, 26. Les commutateurs de recirculation 161, 261 sont ouverts. Les commutateurs de sortie 51, 52 sont fermés. Cette phase d'arrêt fonctionne ainsi en circuit quasi-fermé.

Ce fonctionnement sans apport d'air neuf sur l'ensemble des groupes permet d'appauvrir très fortement l'air en oxygène et d'abaisser rapidement la tension aux bornes des cathodes des groupes de cellules, tout en évacuant l'eau liquide. Cette phase d'arrêt par recirculation peut être assortie d'un niveau de tension minimum et/ou une durée minimum. L'alimentation en hydrogène à l'anode des cellules peut être maintenue pendant cette phase pour éviter une pénurie locale en combustible et une accumulation d'eau liquide dans les cellules. Alternativement, l'alimentation en hydrogène peut être pulsée, voire coupée.

Après cette phase d'arrêt, les groupes sont typiquement chargés en hydrogène et azote (H2 + N2), respectivement au niveau des anodes et des cathodes. Cela permet un redémarrage de la pile progressif. Cela permet d'éviter une dégradation des groupes de la pile lors du redémarrage. Le phénomène de dégradation lors du redémarrage est en effet potentiellement lié à la formation d'un front H2/air à l'anode et la présence d'air à la cathode.

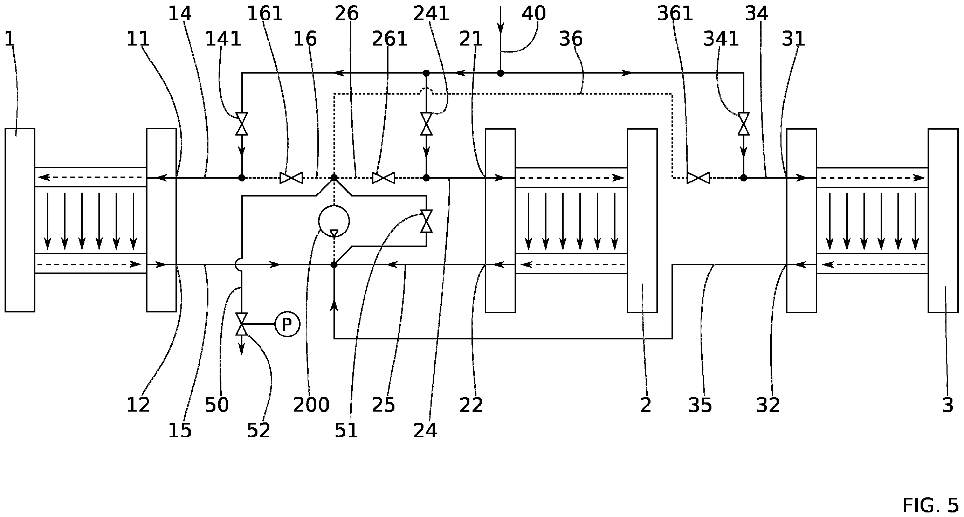

Un deuxième exemple de pile 100 comprenant un système de régénération selon l'invention est illustré aux figures 5 à 9. Dans cet exemple, la pile comprend trois groupes 1, 2, 3 connectés via le circuit fluidique. Comme précédemment, la pile et le circuit fluidique sont dimensionnés de façon à obtenir une stoechiométrie globale comprise entre 1,6 et 2,0, typiquement en tenant compte des pertes de charge au sein des groupes 1, 2, 3.

Le circuit fluidique comprend typiquement un conduit d'alimentation principal 40, des lignes d'alimentation 14, 24, 34, des lignes d'évacuation 15, 25, 35, des lignes de recirculation 16, 26, 36 et un conduit d'évacuation principal 50. Ce circuit fluidique comprend en outre des commutateurs d'entrée 141, 241, 341, des commutateurs de sortie 51, 52, des commutateurs de recirculation 161, 261, 361. La structure de cette pile ne varie pas dans les figures 5 à 9. Seul l'état bloquant ou passant des différents commutateurs, déterminant le chemin de circulation du fluide dans le circuit fluidique, varie. L'assignation des entrées et sortie varie également, en fonction des différentes phases de fonctionnement de la pile et du sens de circulation du fluide d'alimentation.

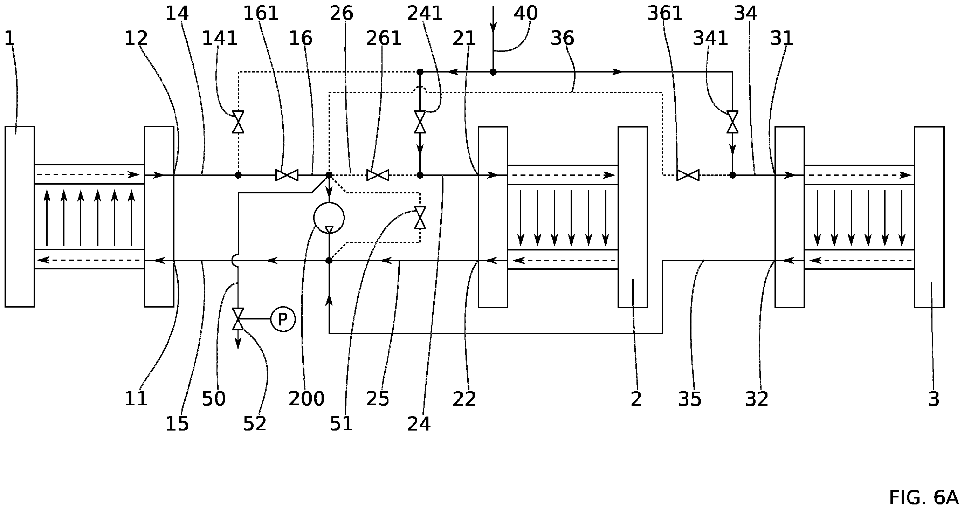

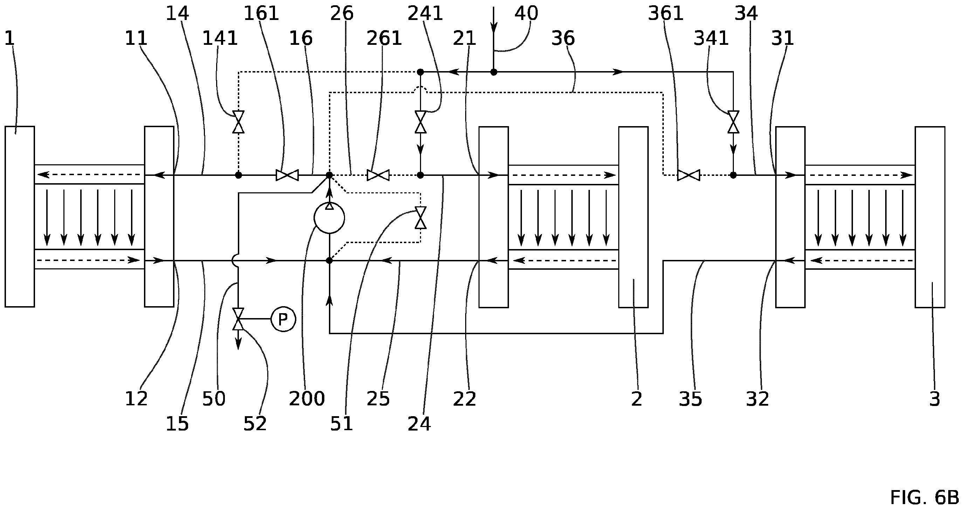

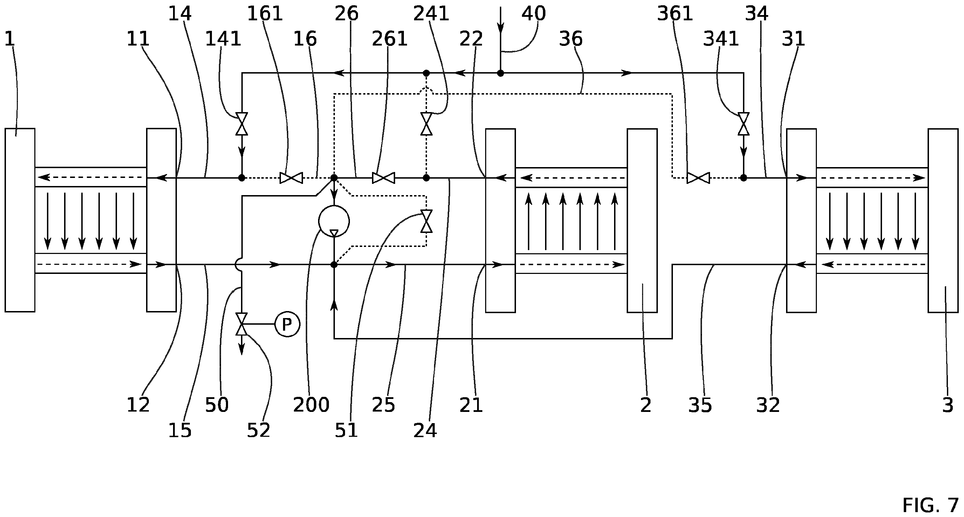

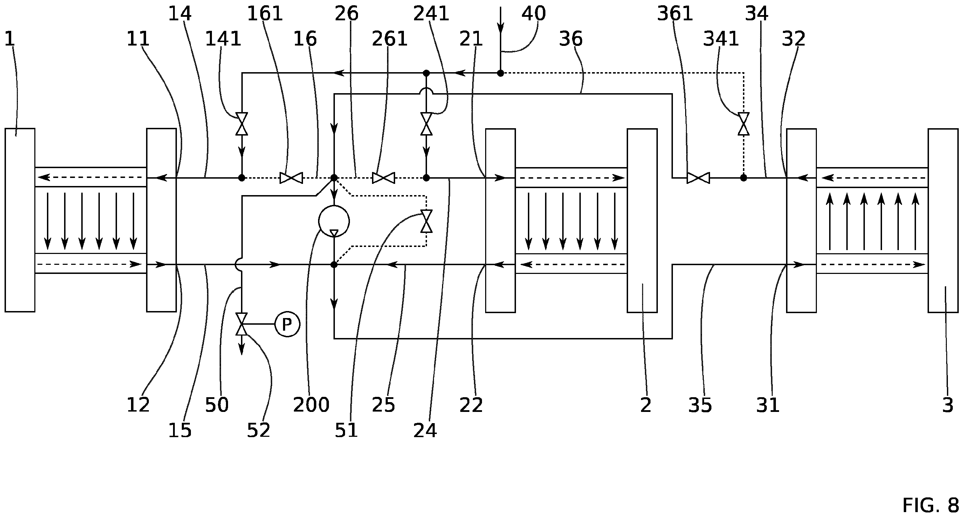

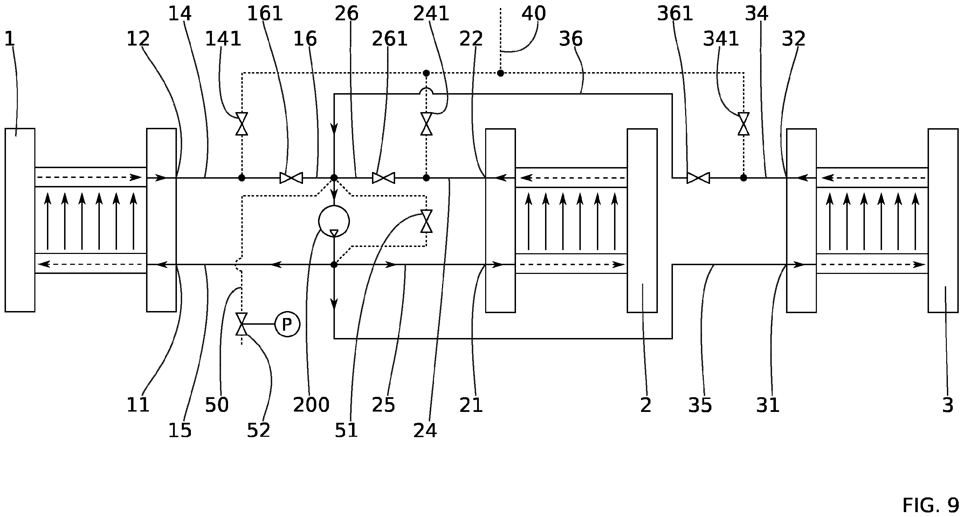

La figure 5 illustre un fonctionnement de cette pile lors d'une phase de production nominale. Les figures 6A, 6B illustrent un fonctionnement de cette pile lors d'une phase de régénération du groupe 1, selon deux sens de circulation opposés dans le groupe 1. La figure 7 illustre un fonctionnement de cette pile lors d'une phase de régénération du groupe 2. La figure 8 illustre un fonctionnement de cette pile lors d'une phase de régénération du groupe 3. La figure 9 illustre un fonctionnement de cette pile lors d'une phase d'arrêt.

Comme illustré en figure 5, lors d'une phase de production nominale, tous les groupes 1, 2, 3 sont alimentés en parallèle, simultanément. Ainsi l'air arrivant dans la pile est amené par le conduit d'alimentation principal 40 et distribué à l'entrée 11 du groupe 1, à l'entrée 21 du groupe 2, et à l'entrée 31 du groupe 3. Les commutateurs d'entrée 141, 241, 341 sont ouverts. L'air circule dans chaque ligne d'alimentation 14, 24, 34 jusqu'aux entrées respectives 11, 21, 31 des groupes 1, 2, 3. Après avoir traversé les groupes 1, 2, 3, l'air sort par les sorties respectives 12, 22, 32 et circule dans chaque ligne d'évacuation 15, 25, 35 jusqu'au conduit d'évacuation principal 50. Les commutateurs de sortie 51, 52 sont ouverts. Les commutateurs de recirculation 161, 261, 361 sont fermés de sorte que l'air ne circule pas dans les lignes de recirculation 16, 26, 36. Cette phase de fonctionnement correspond au fonctionnement nominal de la pile en l'absence de régénération des performances.

Comme illustré à la figure 6A, le groupe 1 est en cours de régénération et les groupes 2 et 3 sont en cours de production nominale. Dans cet exemple, l'air arrivant dans la pile 100 est amené par le conduit d'alimentation principal 40 à l'entrée 21 du groupe 2 et à l'entrée 31 du groupe 3. Le commutateur d'entrée 141 du groupe 1 est fermé. Les commutateurs d'entrée 241, 341 sont ouverts. L'air circule dans les lignes d'alimentation 24, 34 jusqu'aux entrées 21, 31. Après avoir traversé les groupes 2 et 3 en parallèle, l'air sort par les sorties respectives 22, 32 et circule dans les lignes d'évacuation 25, 35 jusqu'à l'entrée 11 du groupe 1. Le groupe 1 est ainsi alimenté par un air appauvri en oxygène provenant de la sortie 22 du groupe 2 et de la sortie 32 du groupe 3. Cet air présente par exemple une fraction molaire d'O2 de l'ordre de 11,7% en sortie des groupes 2 et 3.

Pour diminuer encore plus la fraction molaire d'oxygène de l'air alimentant le groupe 1 en phase de régénération, l'air sortant du groupe 1 par la sortie 12 est avantageusement réinjecté en partie dans le groupe 1 par l'entrée 11 via la ligne de recirculation 16. Le commutateur de recirculation 161 est ici ouvert, tandis que les commutateurs de recirculation 261, 361 sont fermés. Le commutateur de sortie 51 est fermé afin d'éviter un bypass de la pompe 200. Une partie de l'air circulant dans la ligne de recirculation 16 est évacué via le conduit d'évacuation principal 50 et le régulateur de pression 52.

La figure 6B illustre une variante de régénération du groupe 1 dans laquelle le sens de circulation de l'air au niveau du groupe 1 est inversé par rapport au cas illustré à la figure 6A. Ceci est typiquement réalisé par inversion du sens de circulation au niveau de la pompe de recirculation 200. L'entrée 11 et la sortie 21 sont inversées par rapport à l'exemple précédent. Excepté le sens de circulation, le fonctionnement reste ici identique à celui de l'exemple précédent.

La figure 7 illustre une phase de régénération du groupe 2 tandis que les groupes 1 et 3 sont en phase de production nominale. Dans cet exemple, l'air arrivant dans la pile 100 est amené par le conduit d'alimentation principal 40 à l'entrée 11 du groupe 1 et à l'entrée 31 du groupe 3. Le commutateur d'entrée 241 du groupe 2 est fermé. Les commutateurs d'entrée 141, 341 sont ouverts. L'air circule dans les lignes d'alimentation 14, 34 jusqu'aux entrées 11, 31. Après avoir traversé les groupes 1 et 3 en parallèle, l'air sort par les sorties respectives 12, 32 et circule dans les lignes d'évacuation 15, 35 jusqu'à l'entrée 21 du groupe 2. Le groupe 2 est ainsi alimenté par un air appauvri en oxygène provenant de la sortie 12 du groupe 1 et de la sortie 32 du groupe 3. Cet air présente par exemple une fraction molaire d'O2 de l'ordre de 11,7% en sortie des groupes 1 et 3.

Pour diminuer encore plus la fraction molaire d'oxygène de l'air alimentant le groupe 2 en phase de régénération, l'air sortant du groupe 2 par la sortie 22 est avantageusement réinjecté en partie dans le groupe 2 par l'entrée 11 via la ligne de recirculation 26. Le commutateur de recirculation 261 est ici ouvert, tandis que les commutateurs de recirculation 161, 361 sont fermés. Le commutateur de sortie 51 est fermé afin d'éviter un bypass de la pompe 200. Une partie de l'air circulant dans la ligne de recirculation 26 est évacué via le conduit d'évacuation principal 50 et le régulateur de pression 52.

Une phase de régénération similaire du groupe 3 est illustrée à la figure 8. Dans cet exemple, l'air arrivant dans la pile 100 est amené par le conduit d'alimentation principal 40 à l'entrée 11 du groupe 1 et à l'entrée 21 du groupe 2. Les groupes 1 et 2 sont ainsi en phase de production nominale. Le commutateur d'entrée 341 du groupe 3 est fermé. Les commutateurs d'entrée 141, 241 sont ouverts. L'air circule dans les lignes d'alimentation 14, 24 jusqu'aux entrées 11, 21. Après avoir traversé les groupes 1 et 2 en parallèle, l'air sort par les sorties respectives 12, 22 et circule dans les lignes d'évacuation 15, 25 jusqu'à l'entrée 31 du groupe 3. Le groupe 3 est ainsi alimenté par un air appauvri en oxygène provenant de la sortie 12 du groupe 1 et de la sortie 22 du groupe 2. Cet air présente par exemple une fraction molaire d'O2 de l'ordre de 11,7% en sortie des groupes 1 et 2.

Pour diminuer encore plus la fraction molaire d'oxygène de l'air alimentant le groupe 3 en phase de régénération, l'air sortant du groupe 3 par la sortie 32 est avantageusement réinjecté en partie dans le groupe 3 par l'entrée 31 via la ligne de recirculation 36. Le commutateur de recirculation 361 est ici ouvert, tandis que les commutateurs de recirculation 161, 261 sont fermés. Le commutateur de sortie 51 est fermé afin d'éviter un bypass de la pompe 200. Une partie de l'air circulant dans la ligne de recirculation 36 est évacué via le conduit d'évacuation principal 50 et le régulateur de pression 52.

La pompe de recirculation 200 est de préférence commune aux lignes de recirculation 16, 26, 36.

Les caractéristiques, effets et avantages de la régénération des groupes décrits précédemment dans le cadre du premier exemple sont parfaitement transposables à ce deuxième exemple et ne sont donc pas répétés ici, par souci de concision. Ainsi, les caractéristiques non décrites dans cet exemple de pile à trois groupes sont réputées identiques à celles décrites dans l'exemple de pile à deux groupes.

La figure 9 illustre une phase d'arrêt de la pile 100. L'alimentation en air est coupée au niveau du conduit d'alimentation principal 40. Les commutateurs d'entrée 141, 241, 341 sont fermés. La pompe de recirculation 200 permet à l'air de circuler dans chaque ligne de recirculation 16, 26, 36, de façon à alimenter les groupes 1, 2 et 3 par recirculation. Les commutateurs de recirculation 161, 261, 361 sont ouverts. Les commutateurs de sortie 51, 52 sont fermés. Cette phase d'arrêt fonctionne ainsi en circuit quasi-fermé.

Ce fonctionnement sans apport d'air neuf sur l'ensemble des groupes permet d'appauvrir très fortement l'air en oxygène et d'abaisser rapidement la tension aux bornes des cathodes des groupes de cellules, tout en évacuant l'eau liquide.

Les phases de production nominale, de régénération d'un groupe, d'arrêt de la pile sont avantageusement pilotées par un système de contrôle-commande (non illustré).

Le système et le procédé de régénération permettent avantageusement de basculer momentanément dans une phase de régénération de performance pour un ou plusieurs groupes, lorsque les performances de la pile (ou d'un ou plusieurs groupes) diminuent à cause de dégradations réversibles, ou lors d'une phase de production électrique modérée, à la demande du système de contrôle-commande par exemple.

L'invention n'est pas limitée aux modes de réalisations précédemment décrits.

## Revendications

1. Pile à combustible (100) comprenant :
- Au moins deux groupes (1, 2, 3) de cellules électrochimiques présentant chacun une entrée (11, 21, 31) et une sortie (12, 22, 32) aptes à recevoir un fluide, et
- Un circuit fluidique destiné à guider ledit fluide et comprenant, pour chaque groupe (1, 2, 3) :
∘ une ligne d'alimentation (14, 24, 34) fluidique connectée à l'entrée (11, 21, 31) du groupe considéré, ladite ligne d'alimentation (14, 24, 34) fluidique comprenant un commutateur d'entrée (141, 241, 341) configuré pour autoriser ou bloquer un écoulement dudit fluide,
∘ une ligne d'évacuation (15, 25, 35) fluidique connectée à la sortie (12, 22, 32) du groupe (1, 2, 3) considéré,
chaque ligne d'alimentation (14, 24, 34) fluidique étant reliée à un conduit d'alimentation (40) principal commun aux groupes (1, 2, 3) et chaque ligne d'évacuation (15, 25, 35) fluidique étant reliée à un conduit d'évacuation (50) principal commun aux groupes (1, 2, 3), ledit conduit d'évacuation (50) principal comprenant au moins un commutateur de sortie (51, 52) configuré pour autoriser ou bloquer l'écoulement du fluide,
le circuit fluidique comprenant en outre, pour chaque groupe (1, 2, 3) une ligne de recirculation (16, 26, 36) configurée pour mettre en communication fluidique l'entrée (11, 21, 31) et la sortie (12, 22, 32) du groupe (1, 2, 3) considéré, ladite ligne de recirculation (16, 26, 36) comprenant un commutateur de recirculation (161, 261, 361) configurés pour autoriser ou bloquer l'écoulement du fluide,
les commutateurs d'entrée, de sortie et de recirculation du circuit fluidique étant configurés pour permettre, lors d'une phase de régénération d'un groupe donné, une alimentation du groupe donné à partir d'une ligne de recirculation dudit groupe donné et d'une ligne d'évacuation fluidique d'au moins un autre groupe
ladite pile à combustible (100) étant **caractérisée en ce que** le fluide présente un premier sens d'écoulement dans le groupe donné lors de la phase de régénération dudit groupe donné, et un deuxième sens d'écoulement dans le groupe donné lors d'une phase de production nominale dudit groupe donné, le premier sens d'écoulement étant opposé au deuxième sens d'écoulement et la phase de production nominale étant distincte de la phase de régénération.

2. Pile selon la revendication précédente dans laquelle la ligne de recirculation (16) d'un groupe (1) présente au moins une section (160, 260) commune avec la ligne de recirculation (26) d'au moins un autre groupe (2).

3. Pile selon l'une quelconque des revendications précédentes dans laquelle le circuit fluidique comprend en outre une pompe de recirculation (200) commune à chaque ligne de recirculation (16, 26, 36) du circuit fluidique, ladite pompe de recirculation (200) étant configurée pour maintenir, dans le groupe donné lors de la phase de régénération, un débit de fluide supérieur ou égal à 50%, et de préférence supérieur ou égale à 80%, d'un débit nominal mesuré dans le conduit d'alimentation (40) principal.

4. Pile selon la revendication précédente dans laquelle la pompe de recirculation (200) est configurée pour permettre une inversion d'un sens d'écoulement du fluide dans ledit groupe donné.

5. Pile selon l'une quelconque des revendications précédentes comprenant en outre un système de contrôle-commande configuré pour commander les commutateurs d'entrée (141, 241, 341), de sortie (51, 52) et de recirculation (161, 261, 361) du circuit fluidique de façon à autoriser ou bloquer l'écoulement du fluide le long d'un chemin fluidique choisi.

6. Pile selon l'une quelconque des revendications précédentes comprenant au moins trois groupes (1, 2, 3) de cellules électrochimiques et dans laquelle, lors de la phase de régénération d'au moins un groupe donné, l'alimentation dudit au moins un groupe donné se fait à partir de la ligne de recirculation dudit au moins un groupe donné et des lignes d'évacuation fluidique des autres groupes de la pile.

7. Procédé de régénération d'une pile à combustible (100) selon l'une quelconque des revendications précédentes, comprenant :
- Une alimentation de la pile par le conduit d'alimentation (40) principal par un fluide présentant un débit nominal et une fraction molaire nominale de comburant,
lors d'une phase de régénération d'un groupe donné :
- Une commutation des commutateurs d'entrée (141, 241, 341), de sortie (51, 52) et de recirculation (161, 261, 361) du circuit fluidique de façon à alimenter le groupe donné à partir de la ligne de recirculation dudit groupe donné et d'une ligne d'évacuation fluidique d'au moins un autre groupe,
- Une application d'une tension de régénération Ve aux cellules dudit groupe donné, Ve étant inférieure ou égale à 0,3 V.

8. Procédé selon la revendication précédente dans lequel la phase de régénération est configurée de sorte que la fraction molaire de comburant dans le fluide circulant au travers du groupe donné soit inférieure ou égale à 50% de la fraction molaire nominale de comburant.

9. Procédé selon l'une quelconque des revendications 7 à 8 dans lequel le fluide circulant au travers du groupe donné présente un débit supérieur ou égal à 50% du débit nominal, de préférence supérieur ou égal à 80% du débit nominal.

10. Procédé selon l'une quelconque des revendications 7 à 9 dans lequel la phase de régénération est effectuée pendant une durée t inférieure ou égale à 10 s.

11. Procédé selon l'une quelconque des revendications 7 à 10 dans lequel la phase de régénération est effectuée alternativement sur chaque groupe (1, 2, 3) de cellules électrochimiques de la pile.

12. Procédé selon l'une quelconque des revendications 7 à 11 dans lequel la phase de régénération comprend une inversion du sens d'écoulement du fluide dans ledit groupe donné.

13. Procédé selon l'une quelconque des revendications 7 à 12 dans lequel la phase de régénération est effectuée lorsque la pile n'a pas besoin de fonctionner en phase de production nominale, en particulier lorsqu'une production électrique demandée à la pile est inférieure à une production électrique nominale de la pile.

14. Procédé selon l'une quelconque des revendications 7 à 13 dans lequel la pile comprend au moins trois groupes (1, 2, 3) et la phase de régénération est effectuée simultanément sur le groupe donné et sur au moins un autre groupe.

15. Procédé selon l'une quelconque des revendications 7 à 14 dans lequel au moins un groupe de la pile est en phase de production nominale pendant la phase de régénération d'au moins un groupe donné.

## Patentansprüche

1. Brennstoffzelle (100), die Folgendes umfasst:
- mindestens zwei Gruppen (1, 2, 3) elektrochemischer Zellen, die jeweils einen Eingang (11, 21, 31) und einen Ausgang (12, 22, 32), die dazu geeignet sind, ein Fluid aufzunehmen, und
- einen Fluidkreislauf aufweisen, der dazu bestimmt ist, das Fluid zu leiten und für jede Gruppe (1, 2, 3) Folgendes umfasst:
o eine Fluidversorgungsleitung (14, 24, 34), die mit dem Eingang (11, 21, 31) der betreffenden Gruppe verbunden ist, wobei die Fluidversorgungsleitung (14, 24, 34) einen Eingangsschalter (141, 241, 341) umfasst, der dazu konfiguriert ist, ein Strömen des Fluids zu gestatten oder zu blockieren,
o eine Fluidabflussleitung (15, 25, 35), die mit dem Ausgang (12, 22, 32) der betreffenden Gruppe (1, 2, 3) verbunden ist,
wobei jede Fluidversorgungsleitung (14, 24, 34) mit einer Hauptversorgungsrohrleitung (40), die den beiden Gruppen (1, 2, 3) gemeinsam ist, verbunden ist, und jede Fluidabflussleitung (15, 25, 35) mit einer Hauptabflussrohrleitung (50), die den Gruppen (1, 2, 3) gemeinsam ist, verbunden ist, wobei die Hauptabflussrohrleitung (50) mindestens einen Ausgangsschalter (51, 52) umfasst, der dazu konfiguriert ist, das Strömen des Fluids zu gestatten oder zu blockieren,
wobei der Fluidkreislauf außerdem für jede Gruppe (1, 2, 3) eine Rückführleitung (16, 26, 36) umfasst, die dazu konfiguriert ist, den Eingang (11, 21, 31) und den Ausgang (12, 22, 32) der betreffenden Gruppe (1, 2, 3) in Fluidverbindung zu versetzen, wobei die Rückführleitung (16, 26, 36) einen Rückführschalter (161, 261, 361) umfasst, der dazu konfiguriert ist, das Strömen des Fluids zu gestatten oder zu blockieren,
wobei der Eingangs-, der Ausgangs- und der Rückführschalter dazu konfiguriert ist, in einer Regenerationsphase einer gegebenen Gruppe eine Versorgung der gegebenen Gruppe ausgehend von einer Rückführleitung der gegebenen Gruppe und einer Fluidabflussleitung mindestens einer anderen Gruppe zu erlauben,
wobei die Brennstoffzelle (100) **dadurch gekennzeichnet ist, dass** das Fluid eine erste Strömungsrichtung in der gegebenen Gruppe in der Regenerationsphase der gegebenen Gruppe aufweist, und eine zweite Strömungsrichtung in der gegebenen Baugruppe in einer Nennproduktionsphase der gegebenen Gruppe, wobei die erste Strömungsrichtung der zweiten Strömungsrichtung entgegengesetzt ist und die Nennproduktionsphase von der Regenerationsphase getrennt ist.

2. Brennstoffzelle nach dem vorstehenden Anspruch, wobei die Rückführleitung (16) einer Gruppe (1) mindestens einen Teilabschnitt (160, 260) umfasst, den sie mit der Rückführleitung (26) mindestens einer anderen Gruppe (2) gemeinsam nutzt.

3. Brennstoffzelle nach einem der vorstehenden Ansprüche, wobei der Fluidkreislauf außerdem eine Rückführpumpe (200) umfasst, die jeder Rückführleitung (16, 26, 36) des Fluidkreislaufs gemeinsam ist, wobei die Rückführpumpe (200) dazu konfiguriert ist, in der gegebenen Gruppe bei der Regenerationsphase einen Fluiddurchsatz größer oder gleich 50 % und bevorzugt größer oder gleich 80 % eines Nenndurchsatzes, der in der Hauptversorgungsrohrleitung (40) gemessen wird, aufrecht zu erhalten.

4. Brennstoffzelle nach dem vorstehenden Anspruch, wobei die Rückführpumpe (200) dazu konfiguriert ist, eine Umkehrung einer Strömungsrichtung des Fluids in der gegebenen Gruppe zu erlauben.

5. Brennstoffzelle nach einem der vorstehenden Ansprüche, die außerdem ein Leitsystem umfasst, das dazu konfiguriert ist, den Eingangsschalter (141, 241, 341), Ausgangsschalter (51, 52) und Rückführschalter (161, 261, 361) des Fluidkreislaufs derart zu steuern, dass das Strömen des Fluids entlang eines ausgewählten Fluidpfades gestattet wird.

6. Brennstoffzelle nach einem der vorstehenden Ansprüche, die mindestens drei Gruppen (1, 2, 3) aus elektrochemischen Zellen und wobei in der Regenerationsphase mindestens einer gegebenen Gruppe die Versorgung der mindestens einen gegebenen Gruppe ausgehend von der Rückführleitung der mindestens einen gegebenen Gruppe und den Fluidabflussleitungen der anderen Gruppen der Brennstoffzelle erfolgt.

7. Regenerationsverfahren einer Brennstoffzelle (100) nach einem der vorstehenden Ansprüche, das Folgendes umfasst:
- eine Versorgung der Brennstoffzelle durch die Hauptversorgungsrohrleitung (40) mit einem Fluid, das einen Nenndurchsatz und einen Nennmolenbruch an Sauerstoffträger aufweist,
in einer Regenerationsphase einer gegebenen Gruppe:
- eine Umschaltung des Eingangsschalters (141, 241, 341), Ausgangsschalters (51, 52 und Rückführschalters (161, 261, 361) des Fluidkreislauf derart, dass die gegebene Gruppe ausgehend von der Rückführleitung der gegebenen Gruppe und einer Fluidabflussleitung mindestens einer anderen Gruppe versorgt wird.
- Anlegen einer Regenerationsspannung Ve an die Zellen der gegebenen Gruppe, wobei Ve kleiner oder gleich 0,3 V ist.

8. Verfahren nach dem vorstehenden Anspruch, wobei die Regenerationsphase derart konfiguriert ist, dass der Molenbruch an Sauerstoffträger in dem Fluid, das durch die gegebene Gruppe zirkuliert, kleiner oder gleich 50 % des Nennmolenbruchs an Sauerstoffträger ist.

9. Verfahren nach einem der Ansprüche 7 bis 8, wobei das Fluid, das durch die gegebene Gruppe zirkuliert, einen Durchsatz größer oder gleich 50 % des Nenndurchsatzes, bevorzugt größer oder gleich 80 % des Nenndurchsatzes aufweist.

10. Verfahren nach einem der Ansprüche 7 bis 9, wobei die Regenerationsphase während einer Dauer t kleiner oder gleich 10 s durchgeführt wird.

11. Verfahren nach einem der Ansprüche 7 bis 10, wobei die Regenerationsphase abwechselnd auf jeder Gruppe (1, 2, 3) elektrochemischer Zellen der Brennstoffzelle durchgeführt wird.

12. Verfahren nach einem der Ansprüche 7 bis 11, wobei die Regenerationsphase eine Umkehrung der Strömungsrichtung des Fluids in der gegebenen Gruppe umfasst.

13. Verfahren nach einem der Ansprüche 7 bis 12, wobei die Regenerationsphase durchgeführt wird, wenn die Brennstoffzelle nicht in der Nennproduktionsphase zu arbeiten braucht, insbesondere, wenn eine von der Brennstoffzelle verlangte Stromproduktion kleiner als eine Nennstromproduktion der Brennstoffzelle ist.

14. Verfahren nach einem der Ansprüche 7 bis 13, wobei die Brennstoffzelle mindestens drei Gruppen (1, 2, 3) umfasst und die Regenerationsphase gleichzeitig auf der gegebenen Gruppe und auf mindestens einer anderen Gruppe durchgeführt wird.

15. Verfahren nach einem der Ansprüche 7 bis 14, wobei die mindestens eine Gruppe der Brennstoffzelle während der Regenerationsphase mindestens einer gegebenen Gruppe in Nennproduktionsphase ist.

## Claims

1. Fuel cell (100) comprising:
- At least two groups (1, 2, 3) of electrochemical cells each having an inlet (11, 21, 31) and an outlet (12, 22, 32) capable of receiving a fluid, and
- A fluid circuit intended to guide said fluid and comprising, for each group (1, 2, 3):
• a fluid supply line (14, 24, 34) connected to the inlet (11, 21,31) of the group in question, said fluid supply line (14, 24, 34) comprising an inlet switch (141, 241, 341) configured to enable or block a flow of said fluid,
• a fluid discharge line (15, 25, 35) connected to the outlet (12, 22,32) of the group (1, 2, 3) in question,
each fluid supply line (14, 24, 34) being connected to a main support conduit (40) common to the groups (1, 2, 3) and each fluid discharge line (15, 25, 35) being connected to a main discharge line (50) common to the groups (1, 2, 3), said main discharge conduit (50) comprising at least one outlet switch (51, 52) configured to enable or block the flow of the fluid,
the fluid circuit further comprising, for each group (1, 2, 3),
a recirculation line (16, 26, 36) configured to put the inlet (11, 21, 31) and the outlet (12, 22, 32) of the group (1, 2, 3) in question in fluid communication, said recirculation line (16, 26, 36) comprising a recirculation switch (161, 261, 361) configured to enable or block the flow of the fluid,
the inlet, outlet and recirculation switches of the fluid circuit being configured to enable, during a regeneration phase of a given group, a supplying of the given group from a recirculation line of said given group and of a fluid discharge line of at least one other group,
said fuel cell (100) being **characterised in that** the fluid has a first direction of flow in the given group, during the regeneration phase of said given group, and a second direction of flow in the given group, during a nominal production phase of said given group, the first direction of flow being opposite the second direction of flow and the nominal production phase being distinct from the regeneration phase.

2. Cell according to the preceding claim, wherein the recirculation line (16) of a group (1) has at least one common section (160, 260) with the recirculation line (26) of at least one other group (2).

3. Cell according to any one of the preceding claims, wherein the fluid circuit further comprises a recirculation pump (200) common to each recirculation line (16, 26, 36) of the fluid circuit, said recirculation pump (200) being configured to maintain, in the given group during the regeneration phase, a fluid flow rate greater than or equal to 50%, and preferably greater than or equal to 80%, of a nominal flow rate measured in the main supply conduit (40).

4. Cell according to the preceding claim, wherein the recirculation pump (200) is configured to enable an inversion of a direction of flow of the fluid in said given group.

5. Cell according to any one of the preceding claims, further comprising a self-control system, configured to control the inlet (141, 241, 341), outlet (51, 52) and recirculation (161, 261, 361) switches of the fluid circuit, so as to enable or block the flow of the fluid along a chosen fluid path.

6. Cell according to any one of the preceding claims, comprising at least three groups (1, 2, 3) of electrochemical cells, and wherein, during the phase of regenerating at least one given group, the supply of said at least one given group is done from the recirculation line of said at least one given group and fluid discharge lines of the other groups of the cell.

7. Method for regenerating a fuel cell (100) according to any one of the preceding claims, comprising:
- A supply of the cell by the main supply conduit (40) by a fluid having a nominal flow rate and a nominal molar fraction of fuel,
during a phase of regenerating a given group:
- A switching of the inlet (141, 241, 341), outlet (51, 52) and recirculation (161, 261, 361) switches of the fluid circuit, so as to supply the given group from the recirculation line of said given group, and a fluid discharge line of at least one other group,
- An application of a regeneration voltage Ve to the cells of said given group,Ve being less than or equal to 0.3V.

8. Method according to the preceding claim, wherein the regeneration phase is configured such that the molar fraction of fuel in the fluid circulating through the given group is less than or equal to 50% of the nominal molar fraction of fuel.

9. Method according to any one of claims 7 to 8, wherein the fluid circulating through the given group has a flow rate greater than or equal to 50%, of the nominal flow rate, preferably greater than or equal to 80% of the nominal flow rate.

10. Method according to any one of claims 7 to 9, wherein the regeneration phase is carried out for a duration t less than or equal to 10s.

11. Method according to any one of claims 7 to 10, wherein the regeneration phase is carried out alternatively on each group (1, 2, 3) of electrochemical cells of the cell.

12. Method according to any one of claims 7 to 11, wherein the regeneration phase comprises an inversion of the direction of flow of the fluid in said given group.

13. Method according to any one of claims 7 to 12, wherein the regeneration phase is carried out when the cell does not need to operation in the nominal production phase, in particular when an electrical production demanded at the cell is less than a nominal production of the cell.

14. Method according to any one of claims 7 to 13, wherein the cell comprises at least three groups (1, 2, 3) and the regeneration phase is carried out simultaneously on the given group and on at least one other group.

15. Method according to any one of claims 7 to 14, wherein at least one group of the cell is in nominal production phase during the phase of regenerating at least one given group.
